# EUROPEAN PATENT APPLICATION

(11) **EP 4 607 041 A1**
(43) Date of publication of application: **27.08.2025**
(21) Application number: 24159052.0
(22) Date of filing: 22.02.2024
(51) Int. Cl.: F16B 5/02, F16B 19/02

(54) **CONNECTION SYSTEM, JOINING METHOD AND PRIMARY STRUCTURE**

(71) Applicant: Airbus Operations GmbH, 21129 Hamburg (DE)
(72) Inventor: Werthmann, Vitalij, 21129 Hamburg (DE)

(57) **Abstract**

Disclosed is a connection system (1) for joining at least two parts (2,4), for instance for joining a primary structure of an aircraft, comprising first tolerance compensation means (6) in a first direction, second tolerance compensation means (8) in a second direction, third tolerance compensation means (10) in a third direction and joining means (13) in the first direction, a joining method and a primary structure.

## Description

The present invention refers to connection system for joining at least two parts, for instance for joining a primary structure of an aircraft, a method for joining at least two parts, for instance for joining a primary structure of an aircraft, and a primary structure of an aircraft.

Known primary structures of aircrafts comprise a plurality of frames, stringers, rods and cross beams. The frames and stringers are joined to fuselage skin sections of the aircraft and support the fuselage skin (shell/barrel) in circumferential direction (frames) and in longitudinal direction (stringers) The cross beams extend in transversal direction and are part of a floor grid supporting floor panels. The cross beams are joined with their end portions to the frames and supported in vertical direction by the rods. In longitudinal direction, the floor grid comprises stiffeners such as seat rails which hare joint with the cross beams.

Current way of working is to pre-assemble the floor grid outside of the shell/barrel assembly and install the floor grid into the shell by connecting it at every frame/cross beam position. Due to manufacturing tolerances, it is difficult and time expensive to manage all the interfaces at the same time. The cross beams will be attached directly to the frames by riveting and the contact surfaces should be positioned exact to each other. Doing this at several interfaces at the time can lead to build-in stresses or an installation of additional parts such as shims.

It is an object of the present invention to provide a connection system enabling a quick tolerance compensation between at least two parts, in particular of a primary structure of an aircraft, a timesaving method for joining at least two parts, for instance for joining a primary structure of an aircraft, and a stress relieved primary structure of an aircraft.

The object is achieved by a connection system with the features of claim 1, by a method with the features of claim 8 and by a primary structure with the features of claim 9. Advantageous embodiments are disclosed in the dependent claims, the description and the figures.

An inventive connection system for joining at least two parts, for instance for joining a primary structure of an aircraft with crossbeams and frames, comprises first tolerance compensation means adapted to achieve a tolerance compensation in a first direction, second tolerance compensation means adapted to achieve a tolerance compensation in a second direction, third tolerance compensation means in a third direction; and joining means in order establish the connection between the at least two parts in the first direction.

An inventive method for joining at least two parts, for instance for joining a primary structure of an aircraft, comprises the following steps:
- tolerance compensation in a first direction; and/or
- tolerance compensation in a second direction; and/or
- third tolerance compensation in a third direction, and
- joining the crossbeams and the frames in the first direction.

An inventive primary structure of an aircraft, comprises a plurality of frames, and a plurality of crossbeams, wherein the crossbeams are joint to the frames via connection systems according to the invention.

The invention enables a quick tolerance compensation during the assembly in three directions, this means in longitudinal direction of the aircraft, in horizontal direction of the aircraft and in vertical direction of the aircraft. A floor grid can be pre-assembled outside of a fuselage shell / barrel and installed later on by joining the cross beams to the frames in a stress-relieved manner as tolerances are eliminated by the tolerance compensation means in all directions.

The first tolerance compensation means can comprise a first element with a through hole provided with an internal thread adapted to be fixed to the first part, for instance a frame, and a threaded ring adapted to be in engagement with the internal thread of the first element. Th first tolerance compensation means enables a tolerance combination in longitudinal direction. Due to the thread engagement a sensitive adjustment in axial direction is possible.

In one embodiment, the through hole of the first element is positioned outside of its fixation area such that in a fixed state at the first part the through whole is positioned laterally to the first part. By means of this, a corresponding opening has not to be introduced into the first part in order to enable an axial movement of the threaded ring such it extends over a rear side of the first part.

The second tolerance compensation means can comprise an eccentric bush, which is adapted to be placed in a through hole of the second part, for instance a cross beam. By means of the eccentric bush, a tolerance compensation perpendicular to the longitudinal direction can be achieved just by rotating the bush inside the through hole of the second part.

The third tolerance compensation means can also comprise an eccentric bush which is adapted to be placed in the threaded ring. By means of the eccentric bush, a tolerance compensation perpendicular to the longitudinal direction can be achieved just by rotating the bush inside the through hole of the threaded ring which is in thread engagement with a counterpart (internal thread of the first element) which is fixed to the first part. By rotating both eccentric bushes, their single adjustments perpendicular to the longitudinal direction are overlaid to a resulting tolerance compensation.

The joining means can comprise a screw and a nut. The screw can have a head, a shaft and a threaded portion. The shaft is adapted to be put through the eccentric bushes and the threaded portion is adapted to receive the nut such that a clamping force in the first direction is created forcing the head in direct or indirect contact against the threaded ring and the nut in direct or indirect contact against the second part. By this measure, the clamping force can be adjusted precisely.

In order to avoid that in the unlikely event of losing the nut, the clamping force is reduced, a locknut can be provided adapted to be screwed on the threaded ring.

In what follows, preferred embodiments of the present invention are explained with respect to the accompanying drawings. As is to be understood, the various elements and components are depicted as examples only, may be facultative and/or combined in a manner different than that depicted. Reference signs for related elements are used comprehensively and not necessarily defined again for each figure. Shown is schematically in
- Figure 1: a 3D exploded-view of a first embodiment of a connection system with a frame and cross beam according to the invention;
- Figure 2: a tolerance compensation in vertical and horizontal directions according to the first embodiment;
- Figures 3: and 4 a tolerance compensation and fixation in longitudinal direction according to the first embodiment;
- Figure 5: a 3D exploded-view of a second embodiment of a connection system with a frame and cross beam according to the invention;
- Figure 6: a tolerance compensation in vertical and horizontal directions according to the second embodiment; and
- Figure 7: a zero-tolerance compensation and fixation in longitudinal direction according to the second embodiment;

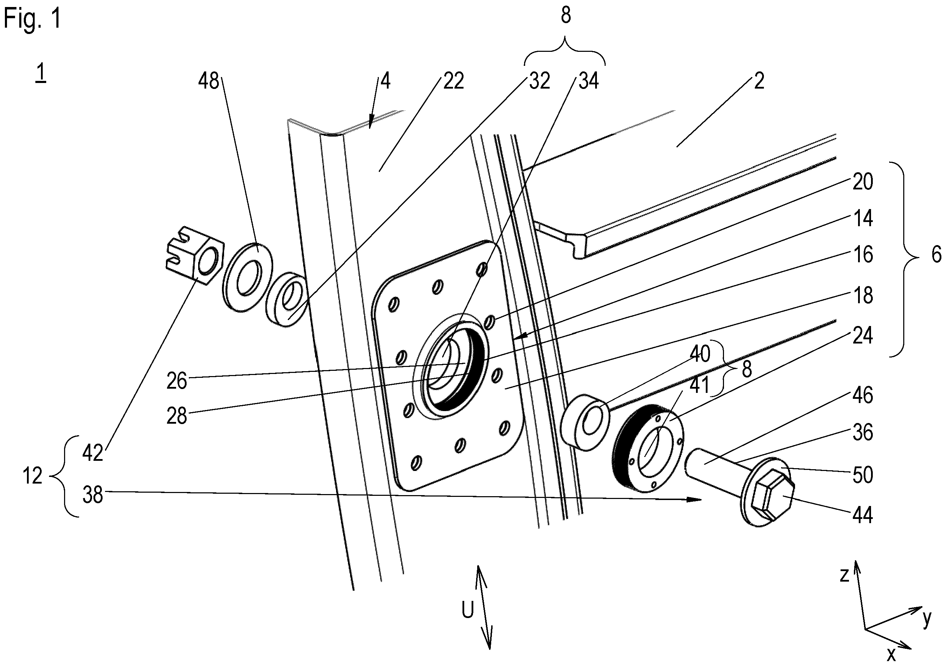

In Figure 1, an explosive view of a first embodiment of an inventive connection system 1 is shown. Here, the connection system 1 is exemplary used to fix a cross beam 2 on a frame 4 of an aircraft fuselage. The cross beams 2 extend in transversal direction y of the aircraft and the frames 4 in circumferential directions u of the aircraft.

A plurality of cross beams 2 and frames 4 form parts of a primary structure of the aircraft supporting its fuselage (shell/ barrel). Stringers, extending in longitudinal direction x of the aircraft are not shown in the Figures.

The cross beams 2 are further parts of a floor grid in order to support not shown floor panels of an aircraft floor. The floor grid can be pre-assembled outside the shell and then fixed to the frames 4 inside the shell afterwards via the connection system 1. Longitudinal stiffeners such as seat rails which are also parts of the floor grid are not shown.

In order to enable a tolerance compensation between the cross beams 2 and the frames 4 in all directions, the inventive connection system 1 comprises a first tolerance compensation means 6 in a first direction, a second tolerance compensation means 8 in a second direction which is different to the first direction, and a third tolerance compensation means 10 in a third direction which is different to the first direction and to the second direction. Further on, the connection system 1 comprises joining means 12 in order to fix a cross beam 2 to a frame 4 in the first direction x.

Here, the first direction is the longitudinal direction x (axial direction), wherein both the second and third directions extend perpendicular to the axial direction x. For instance, the second direction represents the horizontal direction y and the third direction represents the vertical direction z.

The first tolerance compensation means 6 comprises a first element 14 which is fixed to the frame 4. The first element 14 has a platelike shape with a through hole 16 which is positioned in the middle of a fixation area 18. The through hole 16 is provided with an internal thread.

The fixation area 18 comprises a plurality of rivet holes 20 in order to be riveted to the frame 4. The first element 14 is fixed to a radial frame portion 22 such that a longitudinal axis x of the through hole 16 runs in axial direction x of the aircraft.

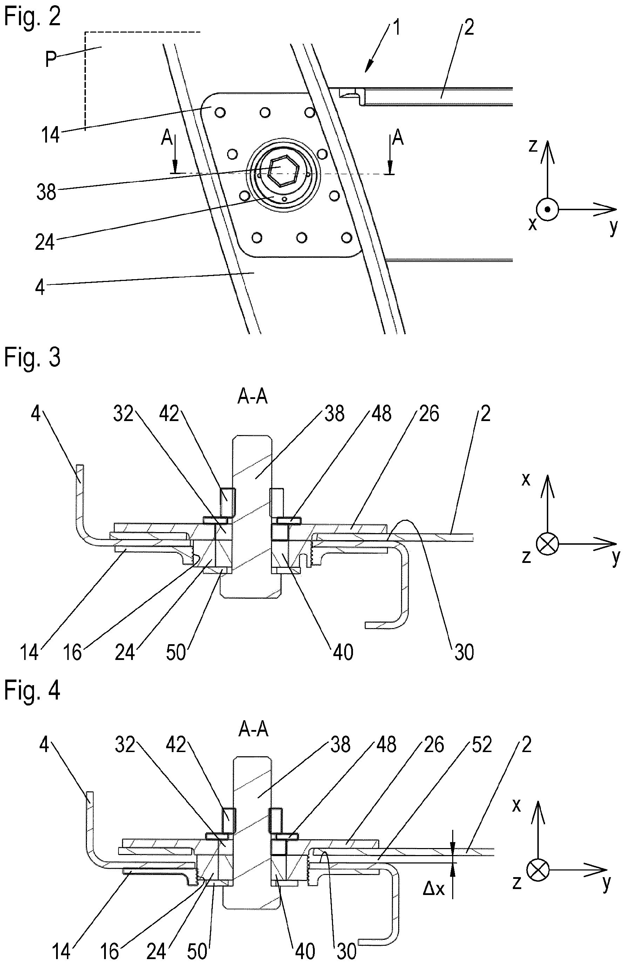

In addition, the first tolerance compensation means 6 has a threaded ring 24. The threaded ring 24 is adapted to be in engagement with the internal thread of the through hole 16 of the first element 14. During engagement the threaded ring 24 can be moved in axial direction x just by rotating to the left or to the right. In order to enable a contact of the threaded ring 24 with an end portion 26 of the cross beam 2, a corresponding axial opening 28 is provided in the radial frame portion 22 enabling the threaded ring 24 to be moved axially through the radial frame portion 22 such that it extends over a rear side 30 of the radial frame portion 22 where the end portion 26 of the cross beam 2 is positioned (see Figures 3 and 4) .

The second tolerance compensation means 8 comprises an eccentric bush 32. The eccentric bush 32 is adapted to be placed in a through hole 34 of the second part 2, here the crossbeam. The through hole 34 is introduced in the end portion 26 and has the same axial extension as the end portion 26. An outer diameter of the eccentric bush 32 correspondence to an inner diameter of the through hole 34 and an inner diameter of the eccentric bush 32 correspondences to an outer diameter of a shaft 36 of a screw 38 of the joining means 10 which will be described later.

The third tolerance compensation means 10 also comprises an eccentric bush 40. This eccentric bush is adapted to be placed in the threaded ring 24. Therefore, an outer diameter of the eccentric bush 40 correspondences to an inner diameter of a centre hole 41 of the threaded ring 24. In order to put the screw shaft 36 of the joining means 12 through, an inner diameter of the eccentric bush 40 correspondences to an outer diameter of the screw shaft 36. Both, the eccentric bush 40 and the threaded ring 24 have the same axial extension.

The joining means 12 comprises the screw 38 and a nut 42. The screw 38 has a head 44, the shaft 36 and a tread portion 46, The shaft 36 is adapted to be put through the eccentric bushes 32, 40 and the thread portion 46 is adapted to be in engagement with the nut 42 such that an axial clamping force in the axial direction x is created forcing the head 44 in direct or indirect contact against the threaded ring 24 from the front and the nut 42 in direct or indirect contact against the cross beam 2 from behind. As shown in Figures 3 and 4, shims 48, 50 can be provided in order to enhance a contact surface between the nut 42 and the cross beam 2 and/or the head 44 of the screw 38 and the threaded ring 24.

As illustrated in Figure 2, by rotating the eccentric bushes 32, 40 inside the through hole 34 of the cross beam 2 and the threaded ring 24, respectively, tolerance compensations are achieved in horizontal direction y and in vertical direction z. In consequence, these compensations lead to a resulting tolerance compensation in a horizontal vertical plane P. Even if both eccentric bushes 32, 40 have the same orientation, a tolerance compensation in the horizontal-vertical plane P is achieved.

As illustrated in Figures 3 and 4, the axial tolerance compensation is realised by rotating the threaded ring 24 inside the through hole 16 of the first element 14 which results in an axial movement of the eccentric bush 40 of the third compensation means 10. As the eccentric bush 40 is in surface contact with the end portion 26 of the cross beam 2, the cross beam 2 is moved in axial direction x correspondingly. In other words, the axial distance Δx of the cross beam 2 to the frame 4 is adjusted by rotating the threaded ring 24 inside the through hole 16 of the first element 14 which is fixed to the frame 4. In a zero-tolerance compensation position (Figure 3), the end portion 26 of the cross beam 2 abuts against the rear side 30 of the radial frame portion 22. In a tolerance compensation position (Figure 4), the cross beam 2 is axially moved away from the rear side 30 of the radial frame portion 22 and an axial gap 52 occurs.

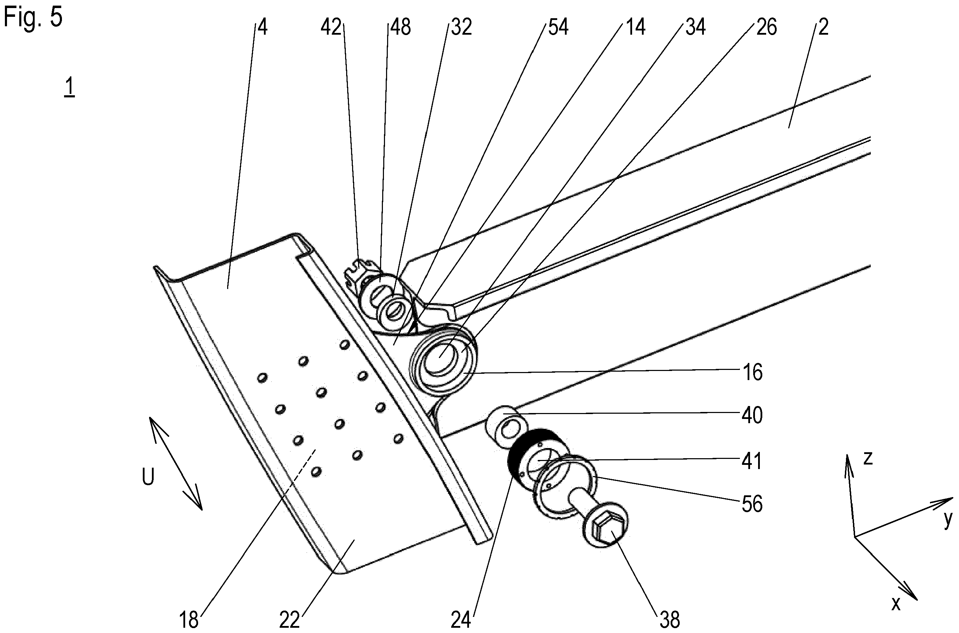

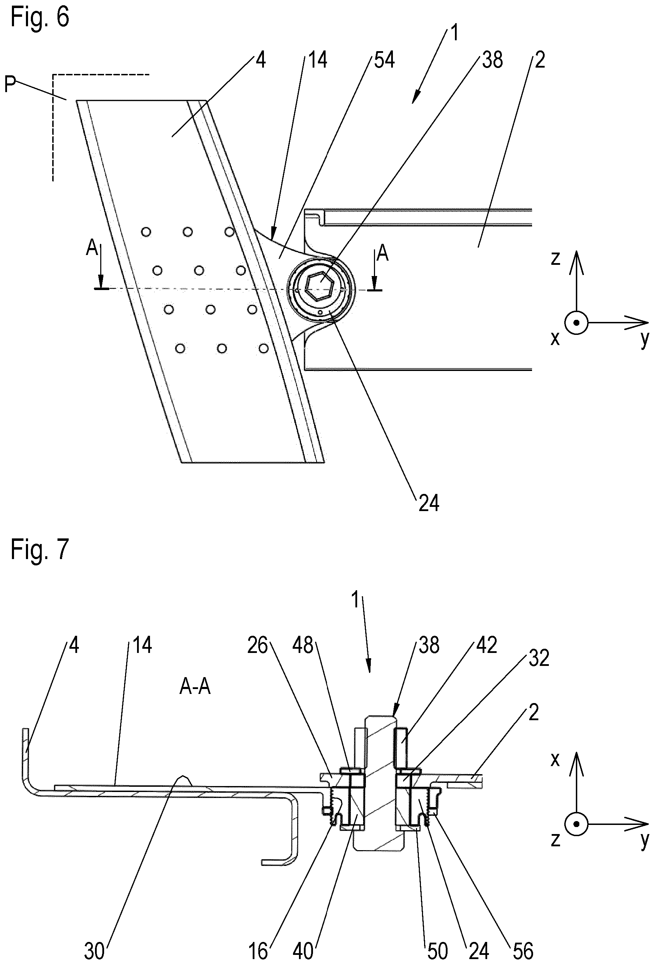

In Figures 5, 6 and 7, a second embodiment of the inventive connection system 1 is shown. The only difference between the first and the second embodiments is that according to the second embodiment the first tolerance compensation means 6 has a first element 14 with a lug 54 forming a through hole 16 adapted to receive a threaded ring 24. Thus, the through hole 16 is positioned outside of a fixation area 18 of the first element 14 latterly to a radial frame portion 22 to which the first element 14 is fixed. By means of this, a corresponding axial opening 28 in the radial frame portion 22 receiving the threaded ring 24 is not required. The cross beam 2 can be shortened in horizontal direction y and in a zero-tolerance compensation state (Figure 7) the cross beam 2 is in direct contact with a rear side 30 of the first element 12.

In order to secure additionally a nut 42 of a joining means 12 on a threaded portion 46 of its screw 38, a locknut 56 can be provided adapted to be screwed on the threaded ring 24. In should be noted that the locknut 56 can also be applied to the first embodiment of the connection system 1 shown in Figures 1 to 4.

Disclosed is a connection system for joining at least two parts, for instance for joining a primary structure of an aircraft, comprising first tolerance compensation means in a first direction, second tolerance compensation means in a second direction, third tolerance compensation means in a third direction and joining means in the first direction, a joining method and a primary structure.

### Reference list

- 1: connection system
- 2: cross beam (second part)
- 4: frame (first part)
- 6: first tolerance compensation means
- 8: second tolerance compensation means
- 10: third tolerance compensation means
- 12: joining means
- 14: first element
- 16: through hole
- 18: fixation area
- 20: rivet holes
- 22: radial frame portion
- 24: threaded ring
- 26: end portion of cross beam
- 28: axal opening
- 30: rear side
- 32: eccentric bush of the second tolerance compensation means
- 34: through hole of the second part
- 36: shaft
- 38: screw
- 40: eccentric bush of the third tolerance compensation means
- 41: centre hole
- 42: nut
- 44: head
- 46: threaded portion
- 48: shim
- 50: shim
- 52: gap
- 54: lug
- 56: locknut
- x: longitudinal direction (first direction, axial direction, longitudinal axis)
- y: horizontal direction (second direction, horizontal axis)
- z: vertical direction (third direction, vertical axis)
- u: circumferential direction
- P: horizontal-vertical plane

## Claims

1. A connection system (1) for joining at least two parts (2, 4), for instance for joining a primary structure of an aircraft with cross beams and frames, comprising:
• first tolerance compensation means (6) in a first direction;
• second tolerance compensation means (8) in a second direction;
• third tolerance compensation means (10) in a third direction; and
• joining means (12) in the first direction.

2. The connection system according to claim 1, wherein the first tolerance compensation means (6) comprises
• a first element (14) with a through hole (16) provided with an internal thread adapted to be fixed to the first part (4);
• a threaded ring (24) adapted to be in engagement with the internal thread of the first element (14).

3. The connection system according to claim 2, wherein the through hole (16) of the first element (14) is positioned outside of its fixation area (18) such that in a fixed state at the first part (4) the through hole (16) is positioned laterally to the first part (4).

4. The connection system according to any of claims 1, 2, or 3, wherein the second tolerance compensation means (8) comprises an eccentric bush (32) which is adapted to be placed in a through hole (34) of the second part.

5. The connection system according to any of the preceding claims, wherein the third tolerance compensation means (10) comprises an eccentric bush (40) which is adapted to be placed in the threaded ring (24).

6. The connection system according to any of the claims 2 to 5, wherein the joining means (12) comprises a screw (38) and a nut (42), wherein the screw (38) has a head (44), a shaft (36) and a threaded portion (46), wherein the shaft (36) is adapted to be put through the eccentric bushes (32, 40) and the threaded portion (46) is adapted to receive the nut (42) such that a clamping force in the first direction is created forcing the head (44) in direct or indirect contact against the threaded ring (24) and the nut (42) in direct or indirect contact against the second part (2).

7. The connection system according to any of the claims 2 to 6, wherein a locknut (56) is provided adapted to be screwed on the threaded ring (24).

8. A method for joining at least two parts (2, 4), for instance for joining a primary structure of an aircraft with cross beams and frames, comprising the following steps:
• tolerance compensation (6) in a first direction; and/or
• tolerance compensation (8) in a second direction; and/or
• third tolerance compensation (10); and
• joining the parts (2, 4) in the first direction.

9. A primary structure of an aircraft, comprising
• a plurality of frames (4), and
• a plurality of cross beams (2),
• wherein the cross beams (2) are joint to the frames (4) via connection systems (1) according to one of the claims 1 to 7.
